# EUROPÄISCHE PATENTSCHRIFT

(11) **EP 0 310 877 B1**
(45) Veröffentlichungstag und Bekanntmachung des Hinweises auf die Patenterteilung: **18.11.1993**
(21) Anmeldenummer: 88115592.3
(22) Anmeldetag: 22.09.1988
(51) Int. Cl.: H04B 3/46

(54) **Verfahren und Schaltungsanordnung zum Sammeln von Eigenüberwachungsinformationen in Nachrichten-Uebertragungseinrichtungen**
Method and circuit arrangement for collecting self-monitoring information in information transmission systems
Procédé et circuit pour recueillir des informations d'autosurveillance dans des systèmes de transmission d'information

(30) Priorität: 30.09.1987 DE 3733023
(43) Veröffentlichungstag der Anmeldung: 12.04.1989
(73) Patentinhaber: SIEMENS AKTIENGESELLSCHAFT, 80333 München (DE)
(72) Erfinder: Rosner, Sönke, Dipl.-Ing., D-8000 München 90 (DE); Herkert, Hans, Dipl.-Ing., D-8021 Hohenschäftlarn (DE)

(56) Entgegenhaltungen:
- EP-A- 0 136 579
- EP-A- 0 193 835
- EP-A- 0 240 833
- DE-A- 2 823 918
- FR-A- 2 342 600

## Beschreibung

Die Erfindung bezieht sich auf ein wie im Oberbegriff des Patentanspruchs 1 angegebenes Verfahren zum Sammeln von Eigenüberwachungsinformationen in Übertragungseinrichtungen der elektrischen Nachrichtenübertragungstechnik und auf eine Schaltungsanordnung zur Durchführung eines derartigen Verfahrens.

Ein derartiges Verfahren und eine solche Schaltungsanordnung sind bereits aus der DE-A 35 06 945 bekannt.

Das bekannte Verfahren gestattet es, Eigenüberwachungsinformationen mehrerer nachrichtentechnischer Geräte oder Nachrichtenübertragungseinrichtungen zu sammeln, mittels einer Signalsammeleinrichtung an eine Zentrale zu übermitteln und in einer zentralen Auswerteeinrichtung auszuwerten. Solche Eigenüberwachungsinformationen können z.B. Pilotalarme bei analoger oder Codefehleralarme bei digitaler Nachrichtenübertragung sein. Außerdem können die dabei übertragenen Telegramme Identifikationsdaten, und zwar Gerätekennungen enthalten. Wird ein Fehler festgestellt, so werden die Daten nochmals ausgelesen.

Ferner ist aus der DE-A 33 32 304 eine Schaltungsanordnung mit einem EEPROM bekannt, das mit Hilfe eines Einstellcomputers geladen wird. Dieses EEPROM dient zum Speichern von Betriebswerten wie Bitrate eines Senders oder Empfängers, die Adresse einer Fernwirkstation oder dergleichen.

Aufgabe der Erfindung ist es, ein wie im Oberbegriff des Patentanspruches 1 angegebenes Verfahren bzw. eine Schaltungsanordnung zur Durchführung eines derartigen Verfahrens zu schaffen, das bzw. die es gestattet, Identifikationsdaten der einzelnen Baueinheiten so zu speichern und abzufragen, daß sich die Identifikationsdaten bei kleinen Speicherabmessungen leicht aktualisieren und durch den Signalsammler abfragen lassen.

Gemäß der Erfindung wird die gestellte Aufgabe in der im kennzeichnenden Teil des Patentanspruches angegebenen Weise gelöst. Ein EEPROM (Electrically Erasable Programmable Read Only Memory) ist ein Lesespeicher, dessen Speicherplätze elektrisch gelöscht und wieder mit neuen Informationen beschrieben werden können. Bei Spannungsausfall geht die Information nicht verloren. Die Abfrage der Identifikationsdaten findet vorzugsweise laufend bzw. in zyklischer Folge statt.

Die Identifikationsdaten können insbesondere
eine Firmensachnummer,
eine Gerätekurzbezeichnung bzw. -Sachnummer,
Ausgabebestände der Unterlagen,
eine Herstellerkennzahl,
eine Fertigungsnummer und/oder
eine Katalognummer sein.

Die Signalsammler können zugleich einer Signalsammeleinrichtung zum Sammeln von Fehlermeldungen angehören oder Teil einer eigenen Einrichtung zum Sammeln von Identifikationsdaten sein.

Durch diese Maßnahmen ergibt sich der Vorteil, daß in Nachrichtenübertragungseinrichtungen mit einer Vielzahl von steckbaren Baueinheiten auf besonders wirtschaftliche Weise Identifikationsdaten gesammelt werden können, die nähere Aufschlüsse über die Identität der überwachten Baueinheiten geben.

Bei der Weiterbildung nach Anspruch 2 brauchen die Identifikationsdaten nur bei Inbetriebnahme der Übertragungseinrichtung vom Signalsammler vollständig an die zentrale Überwachungsvorrichtung übertragen zu werden. Danach werden der zentralen Überwachungsvorrichtung nur noch Änderungen der Identifikationsdaten mitgeteilt, so daß sich eine Reduktion der zu übertragenden Daten ergibt.

Vorteilhafte Schaltungsanordnungen zur Durchführung des Verfahrens nach Anspruch 1 gehen aus den Ansprüchen 3 und 4 hervor.

Bei der Ausführungsform nach Anspruch 3 können die Speicherbausteine jeweils einen eigenen Eingang für ankommende Daten und einen eigenen Ausgang für abgehende Daten oder einen gemeinsamen Daten-Eingang und -Ausgang haben. In beiden Fällen kommt die Schaltungsanordnung mit einer wenig aufwendigen und nur wenige Anschlüsse erfordernden Busverdrahtung aus. In vorteilhafter Weise ist dabei nur ein zentraler Taktgeber erforderlich.

Bei der Ausbildung nach Anspruch 5 werden die Speicherbausteine zweckmäßigerweise mit Adressen versehen, die sich mit Hilfe einer Adressiervorrichtung der Baueinheit einstellen lassen oder beim Einsetzen der Baueinheit von einer außerhalb der Baueinheit befindlichen Adressiervorrichtung über die Steckverbindung zum Speicherbaustein gelangen, so daß die Adressierung auf den Steckplatz bezogen ist.

Bei einer Ausgestaltung der Anordnung nach Anspruch 6 führt zu jedem der Speicherbausteine eine eigene Aufrufleitung, so daß, unabhängig von der Zahl der vom Signalsammler abgefragten Baueinheiten, die Baueinheit für die Adressierung nur einen einzigen Steckkontakt benötigt. Die Weiterbildung nach Anspruch 7 gestattet es in vorteilhafter Weise, Identifikationsdaten jeweils zusammen mit Fehlermeldungen derselben Baueinheit zu übertragen.

Durch die Maßnahmen nach Anspruch 8 ergibt sich der Vorteil, daß in den überwachten Baueinheiten selbst keine Vorrichtungen zur Auswertung von Paritätsbits oder Sicherungsfeldern bzw. zur Fehlererkennung oder -korrektur erforderlich sind.

Die Weiterbildung nach Anspruch 9 und 10 gestattet es jeweils bei Baueinheiten, die als solche keine Stromversorgung benötigen, in die Erfassung der Identifikationsdaten einzubeziehen, ohne daß sie zu diesem Zweck an eine Stromversorgung angeschlossen werden müßten.

Bei der Ausführungsform nach Anspruch 11 werden die Baueinheiten vom Signalsammler über einen Adressenbus aufgerufen, so daß über die Datenleitung keine Adresseninformationen übertragen zu werden brauchen.

Die Erfindung wird anhand der in den Figuren dargestellten Ausführungsbeispiele näher erläutert.

Es zeigen:
- Fig. 1: eine Anordnung zum Sammeln von Überwachungsinformationen,
- Fig. 2: einen mit Einschüben bestückten Einsatz mit Speicherbausteinen,
- Fig. 3: eine Anordnung zum Sammeln von Identifikationsdaten mit adressengesteuertem Aufruf durch serielle Adresseninformationen,
- Fig. 4: einen Ausschnitt aus der Anordnung nach Fig. 3 mit weiteren Einzelheiten,
- Fig. 5: ein Impulsdiagramm für die Anordnung nach Fig. 4,
- Fig. 6: einen Ausschnitt aus einer Anordnung zum Sammeln von Identifikationsdaten mit Adressierung durch Aufrufleitungen,
- Fig. 7: einen Ausschnitt aus einer Anordnung zum gemeinsamen Sammeln von Identifikationsdaten und Fehlermeldungen,
- Fig. 8: für die Anordnung nach Fig. 7 ein Zeitdiagramm für das Auslesen von Fehlermeldungen,
- Fig. 9: für die Anordnung nach Fig. 7 ein Zeitdiagramm für das Auslesen von Fehlermeldungen und Identifikationsdaten,
- Fig.10: einen Speicherbaustein, dessen Versorgungsspannung aus den Taktimpulsen abgeleitet wird und
- Fig.11: einen Speicherbaustein, dessen Speisespannungseingang mit seiner Aufrufleitung verbunden ist.

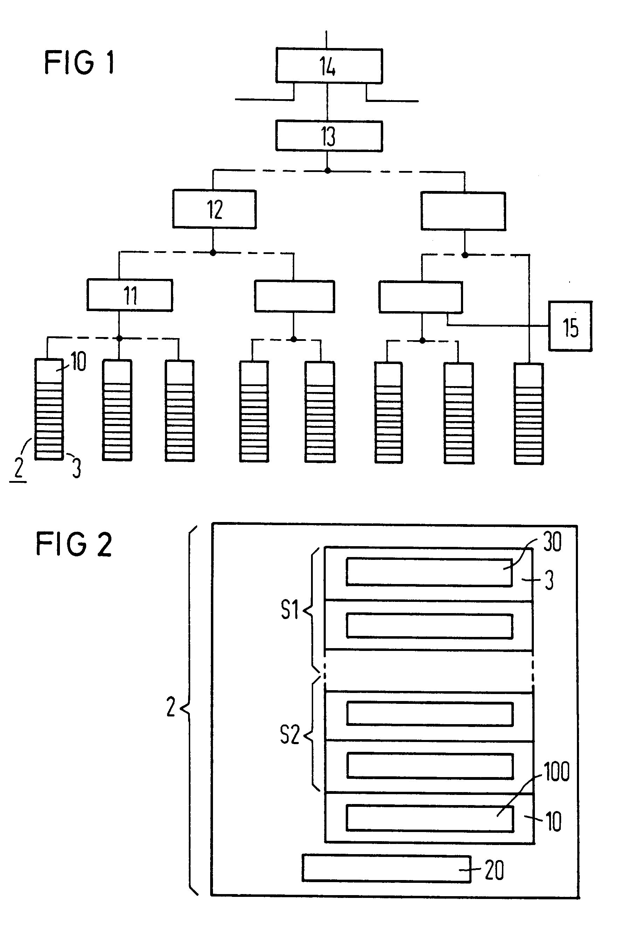

Fig. 1 zeigt eine Signalerfassungseinrichtung mit einem Datennetz von Baumstruktur. Die Signalsammler sind in mehreren Netzebenen angeordnet. An die Datenverarbeitungsanordnung 14 ist der Signalsammler 13 der dritten Netzebene, die eine Betriebsstelle umfaßt, angeschlossen. An den Signalsammler 13 sind die Signalsammler 12 der zweiten Netzebene angeschlossen, die eine Gestellreihe der Bauweise 7R einschließt.

An die Signalsammler 12 der zweiten Netzebene sind jeweils mehrere Signalsammler 11 eines Gestells angeschlossen.

An jeden Signalsammler 11 der ersten Netzebene, die jeweils mehrere Einsätze 2 der Bauweise 7R umfaßt, sind mehrere Signalsammler 10 angeschlossen. Die Signalsammler 10 sind jeweils in einem der Einschübe 3 untergebracht und zusammen mit weiteren Einschüben 3 in einem steckbaren Einsatz 2 der Bw7R enthalten.

Mit Hilfe der in Fig. 1 gezeigten Signalsammeleinrichtung werden der Datenverarbeitungsanlage 14 Identifikationsdaten zur weiteren Verarbeitung zur Verfügung gestellt. Mit Hilfe des an einen der Signalsammler 11 der ersten Netzebene angeschlossenen Service-Terminals 15 lassen sich Identifikationsdaten vor Ort auslesen.

Alle steckbaren Einheiten, d.h. Einschübe 3 und Einsätze 2 sind mit je einem eigenen Speicherbaustein versehen. Der Speicherbaustein ist jeweils durch ein EEPROM gebildet und hat jeweils die Identifikationsdaten der betreffenden Baueinheit gespeichert.

Fig. 2 zeigt einen derart mit Speicherbausteinen bestückten Einsatz. Ein Einsatz 2 enthält mehrere Einschübe 3 mit je einem Speicherbaustein 30, die verschiedenen Nachrichtenübertragungssystemen A und B angehören, einen in einem weiteren Einschub enthaltenen Signalsammler 10 mit einem Speicherbaustein 100 und einen Speicherbaustein 20 für den Einsatz 2 selbst.

Als Speicherbaustein 20 , 100 bzw. 30 dient insbesondere ein EEPROM HCMOS Technologie mit einem seriellen Dateneingang und einem seriellen Datenausgang, so daß sich ein geringer Platzbedarf, eine kleine Verlustleistung, wenig Schnittstellenleitungen und die Möglichkeit der Umprogrammierung ergeben. Das EEPROM hat beispielsweise einen Speicherplatz von 256 Byte, der in einem 8-Pin großem Gehäuse untergebracht ist. Dateneingang und -ausgang können für Zweidrahtbetrieb zusammengefaßt sein.

Ein solcher Speicherbaustein ist beispielsweise das EEPROM MCM 2814 der Firma Motorola. Der Speicherbaustein hat einen ersten und einen zweiten Eingang für eine Bausteinfreigabe, einen Modus-Eingang zur Einstellung auf 2-Draht-Bus-oder 4-Draht-Bus-Betrieb, einen Anschluß für Masse, einen Anschluß für eine Versorgungsspannung, einen Anschluß für eine Programmierspannung, einen Takteingang und einen seriellen Daten-Ein-/Ausgang.

Die Speicherbausteine werden am Herstellungsort, im Prüffeld oder am Einsatzort mittels eines Programmiergerätes oder Service-Terminals mit den Identifikationsdaten versehen. Das Laden von EEPROMSs mit Hilfe von Einstellcomputern ist an sich bekannt und wird daher nicht näher beschrieben.

Die Eingänge zur Bausteinfreigabe dienen zweckmäßigerweise dazu, den Speicherbaustein mit einer Adresse zu versehen. Dabei werden die beiden für die Bausteinfreigabe vorgesehenen Eingänge über je einen Ziehwiderstand an Versorgungsspannung geführt und je nach Adresse mit Masse verbunden oder nicht. Dabei ergeben sich vier Adressen als Masse-Versorgungsspannungs-Kombinationen. In diesem Fall werden die einzelnen Speicherbausteine bzw. Steckeinheiten dadurch aufgerufen, daß ihnen ihre Adresse seriell über die Datenleitung zugeführt wird.

Zur Einstellung der Adresse werden die Eingänge zur Bausteinfreigabe vorzugsweise auf der Rückwand der betreffenden Baueinheit entsprechend mit Masse verdrahtet. Andererseits kann man einen der Eingänge zur Bausteinfreigabe an Masse und den anderen an eine Aufrufleitung anschließen, an die im Falle eines Aufrufs des betreffenden Bausteins Masse angelegt wird.

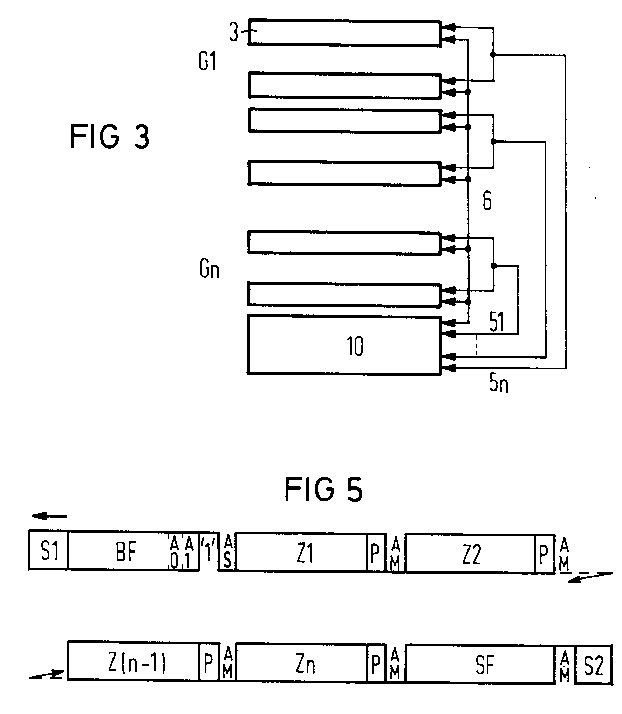

Fig. 3 zeigt eine Schaltungsanordnung mit serieller Adressierung der Speicherbausteine über die Datenleitungen 51...5n. Jeder der Einschübe 3 läßt sich auf eine von vier Adressen einstellen. Mit jeder Datenleitung können somit maximal vier Speicherbausteine bzw. Steckeinheiten adressiert werden. Alle Einschübe 3 werden über die gemeinsame Taktleitung 6 vom Signalsammler 10 mit einem Takt versorgt. Außerdem sind die Einschübe 3 gruppenweise über die Datenleitungen 51...5n an den Signalsammler 10 angeschlossen. Zur ersten Gruppe G1 von Einschüben 3 führt die Datenleitung 51, zur n-ten Gruppe Gn die Datenleitung 5n.

Auf diese Weise lassen sich mit Hilfe eines Signalsammlers 10 n mal 4 steckbare Baueinheiten abfragen.

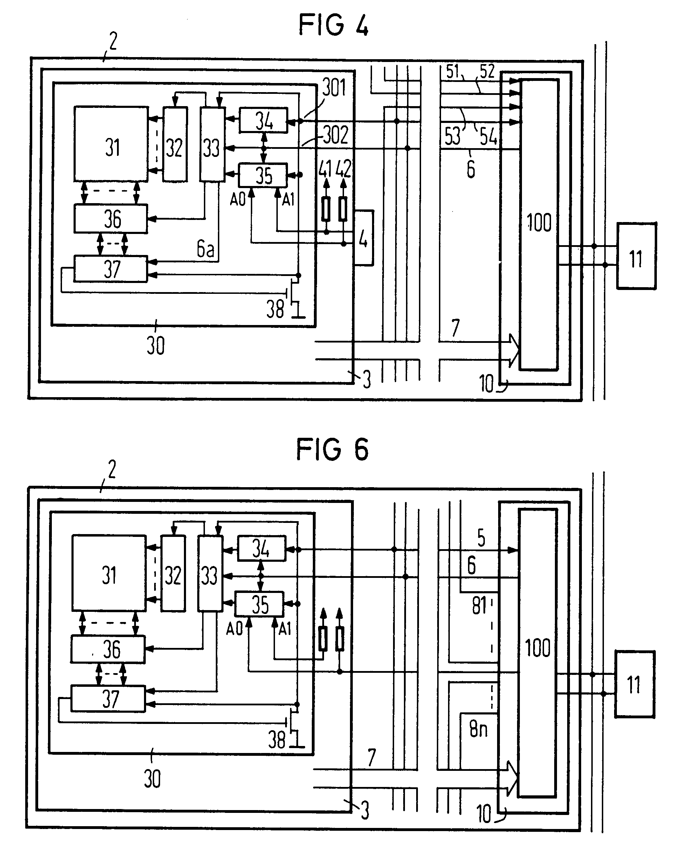

Fig. 4 zeigt weitere Einzelheiten der Schaltungsanordnung nach Fig. 3. Diese Schaltungsanordnung ist für Einsätze mit maximal sechzehn Steckeinheiten bzw. -einschübe 3 geeignet. Der Takt wird allen Steckeinheiten über die gemeinsame Taktleitung 6 zugeführt. Jeweils vier Steckeinheiten haben gemeinsam eine der vier Datenleitungen 51,52,53 oder 54.

Die Auswahl des gewünschten Speicherbausteines erfolgt dadurch, daß der Signalsammler 11 die Adresse des aufzurufenden Speicherbausteins an diejenige Datenleitung abgibt, die zu der Gruppe von Speicherbausteinen führt, der der betreffende Speicherbaustein angehört.

Bei der in Fig. 4 gezeigten Schaltungsanordnung ist von mehreren an den Signalsammler 11 angeschlossenen Einsätzen nur ein Einsatz 2 und von den in diesem Einsatz 2 enthaltenen Einschüben außer dem den Signalsammler 10 enthaltenden Überwachungseinschub nur einer der Einschübe 3 dargestellt. Der Signalsammler 10 enthält einen Mikroprozessor 100, der über den Bus 7 Fehlermeldungen von den Einschüben 3 des Einsatzes 2 empfängt. Jeder Einschub 3 enthält einen Speicherbaustein 30.

Der Speicherbaustein 30 wird mit Hilfe der Vorrichtung 4 auf eine vorgegebene Eigenadresse eingestellt. Diese Eigenadresse ist mit Hilfe der Vorrichtung 4 zur Adresseneinstellung auf der Rückwand des Einschubs, d.h. einschubindividuell oder durch eine entsprechende Einsatzverdrahtung d.h. steckplatzindividuell festgelegt. Die Vorrichtung 4 ist an die Eingänge A0 und A1 des Komparators 35 angeschlossen. Diese Anschlüsse A0 und A1 sind jeweils über einen Ziehwiderstand 41 bzw. 42 an Versorgungsspannung geführt und lassen sich mit Hilfe der Vorrichtung 4 wahlweise an Masse legen.

Der Speicherbaustein 30 enthält einen Komparator 35, der zusammen mit der Start-Stop-Logik 34 und der Kontroll-Logik 33 über die an den Takteingang 302 angeschlossene Taktleitung 6 durch den Mikroprozessor 100 gesteuert wird. Der Komparator 35 vergleicht die über die Datenleitung 54 empfangene Adresse mit der Adresse, die in der Vorrichtung 4 eingestellt ist. Stimmen die beiden Adressen überein, so gibt der Komparator 35 ein Übereinstimmungssignal an die Kontroll-Logik 33 ab. Das eigentliche EEPROM 31 ist mit dem X-Decoder 32 und dem Y-Decoder 36 versehen. Dem X-Decoder 32 ist die Kontroll-Logik 33 vorgeschaltet. Der Y-Decoder 36 ist mit dem Datenregister 37 verbunden, das mittels der Kontroll-Logik 33 über die interne Taktleitung 6a taktsteuerbar ist und mit einem Eingang an den Datenein- und -ausgang 301 angeschlossen und dessen Ausgang über den Treiber 38 an den Datenein-und -ausgang 301 geführt ist.

Die Datenleitung 54, die an den Datenein- und -ausgang 301 des Einschubs 3 geführt ist, führt auch zu drei weiteren, in der Figur nicht dargestellten Einschüben. Die weiteren Datenleitungen 51 bis 53 führen zu je vier weiteren, in der Figur ebenfalls nicht dargestellten Einschüben, so daß der Einsatz 2 zusätzlich zu dem den Signalsammler 10 enthaltenden Überwachungseinschub maximal 16 weitere Einschübe mit Speicherbausteinen enthalten kann.

Das Auslesen der Identifikationsdaten wird vom Signalsammler 10 veranlaßt, der zu diesem Zweck ein Abfragetelegramm an die Datenleitung 54 abgibt. Das erste vom Signalsammler 10 gesendete Datenbyte enthält die beiden Adressbits. Diese Bits werden über den im Speicherbaustein 30 integrierten Komparator 35 mit der Eigenadresse verglichen. Stimmen beide Adressen überein, so sendet der Speicherbaustein 30 des angesprochenen Einschubs 3 ein Quittungssignal und überträgt dann alle seine Identifikationsdaten zum Signalsammler 10. Der Signalsammler 10 quittiert jedes empfangene Datenbyte. Fehlt das Quittungssignal des Signalsammlers 10, so wird die Verbindung abgebrochen.

Nach dem Einschalten des Einsatzes 2 der Schaltungsanordnung nach Fig. 3,4 oder 5 fragt der Signalsammler 10 alle Einschübe 3 nach ihren Identifikationsdaten und speichert diese Daten in seinem Speicher ab. Im Signalsammler 10 werden die Daten sortiert und, falls erforderlich, den einzelnen Systemen des Einsatzes 2 zugeordnet. In dieser Form können die Identifiktionsdaten über ein Signalsammelsystem nach Art der in Fig. 1 gezeigten bekannten Anordnung von der Datenverarbeitungsanlage DVA ausgelesen oder durch ein Service-Terminal 15 abgefragt werden. Die Identifikationsdaten der Einschübe 3 werden nach einem sogenannten Polling-Verfahren zyklisch abgefragt bzw. ausgelesen. Nur bei Änderung, insbesondere bei einem Austausch von Einschüben, werden die neuen Daten zur Datenverarbeitungsanlage DVA weitergegeben.

Ein bevorzugtes Antworttelegramm, mit dem die Identifikationsdaten von Einschub 3 zum Signalsammler 10 übertragen werden, geht aus Fig. 5 hervor. Das Antworttelegramm beginnt mit einem Startzeichen ST1, an das sich ein Teil mit fester Bitfolge BF, die Adressenbits A0 und A1 sowie eine log "1" anschließen. Das Antworttelegramm beginnt mit dem durch eine log "0" gebildeten Quittungssignal AS des Speicherbausteins.

Darauf folgen die Zeichen Z1,Z2,/(n-1),Zn, die jeweils Identifikationsdaten enthalten, das Sicherungsfeld SF, das aus einem oder 2 Byte besteht und das Stopzeichen ST2. Die Quittungssignale AM, die der Signalsammler nach jedem der Zeichen Z1...Z(n-1) abgibt, haben bei richtigem Empfang Logikpegel 0. Das Quittungssignal AM, das sich an das Sicherungsfeld SF anschließt, hat Logikpegel 1.

Fig. 6 zeigt eine Schaltungsanordnung, bei der die im Einsatz 2 enthaltenen Einschübe 3 mit Hilfe von Aufrufleitungen 81...8n aufgerufen werden. Der in einem Überwachungseinschub enthaltene Signalsammler 10 aktiviert die einzelnen Einschübe über die Aufrufleitungen 81...8n. Dabei wird immer nur eine der Aufrufleitungen 81...8n auf log "0" gelegt. Diese Aufrufleitung gibt somit das angesprochene EEPROM 30 frei, in der Weise, daß die darin gespeicherten Identifikationsdaten ausgelesen werden. Das Auslesen der Identifikationsdaten erfolgt in der gleichen Weise wie bei der Schaltungsanordnung nach Fig. 4, d.h. mit Hilfe eines Impulstelegramms nach Fig. 5.

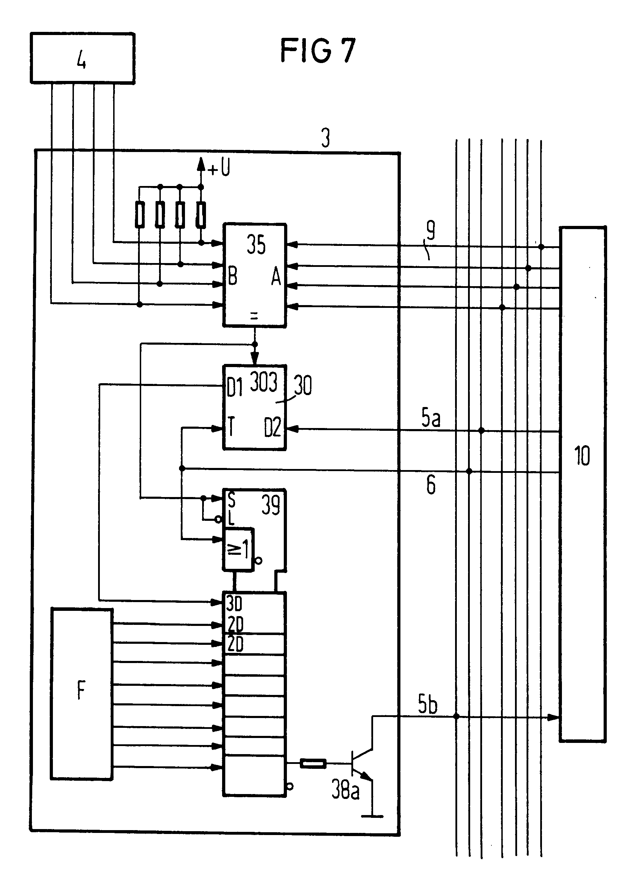

Bei Geräten mit mehreren Systemen bzw. Einschüben pro Einsatz werden die Fehlermeldungen und Identifikationsdaten zweckmäßigerweise gemeinsam über einen seriellen Bus ausgelesen. Eine Schaltungsanordnung, die ein derartiges gemeinsames Auslesen gestattet, ist in Fig. 7 dargestellt.

Fig. 7 zeigt eine Schaltungsanordnung, bei der eine Anzahl von Einschüben und der Signalsammler eines Einsatzes über Busleitungen untereinander verbunden sind. Von diesen Einschüben ist nur ein Einschub 3 dargestellt.

Der Einschub 3 enthält den Adressenvergleicher 41, der sowohl über den Adressenbus 9 mit dem Signalsammler 10 verbunden als auch an die Vorrichtung 4 zur Adresseneinstellung des Einschubes 3 angeschlossen ist. Die Einstellung der Eigenadresse wird wie bei den Schaltungsanordnungen nach Fig. 4 oder 6 vorgenommen, mit der Maßgabe, daß vier statt zwei Adressenbits festgelegt werden. Der Adressenvergleicher 41 vergleicht die Eigenadresse des Einschubes mit den vom Signalsammler 10 in zyklischer Folge an den Adressenbus 9 abgegebenen Adressen. Wird Adressengleichheit festgestellt, so gibt der Adressenvergleicher 41 ein Freigabesignal an den Anschluß 303 zur Bausteinfreigabe des Speicherbausteins 30 und an den Schiebeeingang S und an den Ladeeingang L des Schieberegisters 39 ab.

Der Speicherbaustein 30 ist mit seinem Datenausgang D1 an den Eingang 3D des Schieberegisters 39 geführt und mit seinem Dateneingang D2 an den vom Signalsammler 10 kommenden Datenbus 5a angeschlossen. Der Takteingang T des Speicherbausteins 30 liegt an der allen Einschüben des Einsatzes gemeinsamen Taktleitung 6.

Das Schieberegister 39, das beispielsweise vom Typ 74 HC 165 ist, ist mit dem Eingang 3D an den Datenausgang D1 des Speicherbausteins angeschlossen. Die weiteren Eingänge 2D erhalten vom Fehlermeldungsgeber F Fehlermeldungen als Parallelinformation.

Bei Aufruf durch den Signalsammler 10 werden die Fehlermeldungen im Schieberegister festgehalten, gibt das Schieberegister über den Treiber 38a ein Telegramm an die zum Signalsammler 10 führende Datenleitung 5b, bei dem auf die Fehlermeldungen des Fehlermeldungsgebers F die Identifikationsdaten des Speicherbausteins 30 jeweils in serieller Form folgen.

Die in Fig. 7 gezeigte Schaltungsanordnung wird zweckmäßigerweise als integrierte Schaltung ausgebildet.

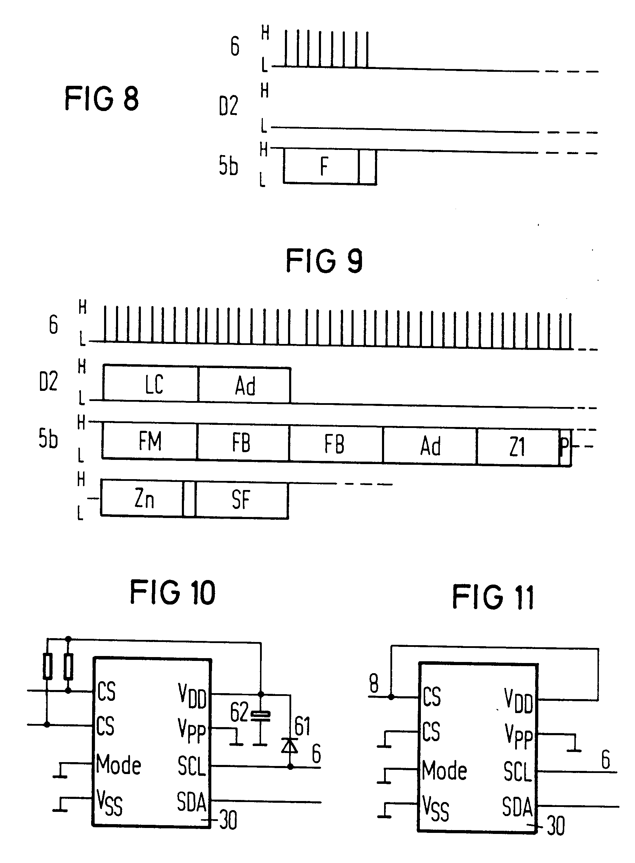

Sollen nur Fehlermeldungen allein ausgelesen werden, so legt der Signalsammler entsprechend Fig. 8 so viele Taktimpulse an die Datenleitung 6, wie Eingänge des Schieberegisters vorhanden sind. Die zum Dateneingang D2 des EEPROMs führende Datenleitung 5a bleibt signalfrei. Der Treiber 38a gibt die Fehlermeldungen an die Datenleitung 5b ab.

Das Auslesen von Fehlermeldungen und Identifikationsdaten zeigt Fig. 9. Der Signalsammler gibt eine längere Folge von Taktimpulsen an die Taktleitung 6 ab. Außerdem empfängt der Dateneingang D2 des EEPROMs 30 vom Signalsammler ein Aufruftelegramm, das aus den Lesecode LC und der Adresse Ad besteht. Dies veranlaßt das EEPROM zur Abgabe einer Zeichenfolge, die aus zwei Füllbytes FB, einer im Protokoll vorgesehenen, aber nicht benutzten Adresse AD, den Identifikationsdaten enthaltenden Zeichen Z1 ... Zn und das Sicherungsfeld SF. Die am Ende der Zeichen Z1 ... Zn vorgesehenen Paritätsbits sind mit P bezeichnet.

Der Treiber 38a in Fig. 7 gibt zunächst die Fehlermeldungen FM und daran anschließend die genannte, von EEPROM stammende Zeichenfolge ab.

Fig. 10 zeigt einen Speicherbaustein 30, dessen Versorgungsspannung V_{DD} aus den auf der Taktleitung 6 ankommenden Taktimpulsen abgeleitet wird.

Die vom Signalsammler zu den Speicherbausteinen führende gemeinsame Taktleitung 6 ist über die für die Taktimpulse in Durchlaßrichtung gepolte Diode 61 an den Speisespannungseingang V_{DD} des Speicherbausteines 30 geführt. Zwischen dem Speisespannungseingang V_{DD} und Masse liegt der Kondensator 62.

Diese Schaltungsanordnung macht sich den Umstand zunutze, daß bei den synchronen Übertragungsverfahren, nach denen die Schaltungsanordnungen nach den Fig. 3,4,6 und 7 arbeiten, der Takt ständig an der gemeinsamen Taktleitung 6 anliegt. Der aus einer Folge von Rechteckimpulsen bestehende Takt von maximal 100 kHz wird mit dem Kondensator, dessen Kapazität etwa im Bereich von 1...10 µF liegt, geglättet. Die A..leitende der Taktimpulse beträgt etwa 5 V. Die geglättete Spannung, die etwa im Bereich von 3...5 V liegt, speist den Speicherbaustein während seines aktiven Zustands, d.h. während des Ein- oder Auslesens. Die Stromaufnahme des CMOS-Speicherbausteines 30 liegt bei etwa 2mA.

Die Schalltungsanordnung nach Fig. 10 ist in den Fällen von besonderem Vorteil, in denen die Schaltungsanordnung zum Sammeln von Eigenüberwachungsinformationen steckbare Baueinheiten enthält, zu denen keine Versorgungsspannung hingeführt wurde und bei denen ein Anschluß an eine Versorgungsspannung nicht ohne weiteres möglich oder mit einem vergleichsweise großen Aufwand verbunden ist.

Fig. 11 zeigt einen Speicherbaustein 30, dessen Versorgungsspannungseingang V_{DD} unmittelbar an die Aufrufleitung 8 angeschlossen ist. Wird der Speicherbaustein 30 über seine Aufrufleitung 8 angewählt, so liegt an dieser Aufrufleitung Spannung an. Diese Spannung ist so bemessen, daß sie den CMOS-Speicherbaustein 8 speisen kann.

Zur Sicherung der Identifikationsdaten wird zweckmäßigerweise das an sich bekannte Verfahren mit zyklischer Blocksicherung oder der Bildung einer Prüfsumme angewendet. Bei beiden Verfahren berechnet das Programmiergerät, das ein Service-Terminal oder ein Personal Computer sein kann, im Prüffeld während des Einschreibens der Identifikationsdaten ins EEPROM die Datensicherung.

Zur Datensicherung dient ein Paritätsbit und ein Blocksicherungsfeld, die zusammen mit den Identifikationsdaten im EEPROMs abgespeichert werden. Beginnend mit der Adresse 0 werden zunächst die Identifikationsdaten eingegeben. Darauf folgt ein Sicherungsfeld, das 1 oder 2 Bytes umfassen kann. Für die Identifikationsdaten wird zweckmäßigerweise der 7-Bit-Code bzw.

ASCII-Code nach DIN 66003 verwendet, und jedem Zeichen ein Paritätsbit hinzugefügt.

Die letzten 2 Bytes im EEPROM nach den Identifikationsdaten gehören dem Sicherungsfeld. Der Inhalt dieses Feldes wird beim Programmieren aus den Identifikationsdaten mit Hilfe eines Generatorpolynoms berechnet. Diese Berechnung wird vom Programmiergerät geleistet.

Werden die aus 7-Bit-Code plus Paritätsbit bestehenden Identifikationsdaten mit dem Blockprüffeld vom Signalsammler 10 ausgelesen, so wird die gleiche Berechnung, die auch beim Einschreiben im Prüffeld vorgenommen wurde, nochmals durchgeführt und das Ergebnis mit dem Inhalt des empfangenen Blockprüffeldes verglichen. Stimmt das Ergebnis nicht mit dem Blockprüffeld überein, so liegt entweder ein Übertragungsfehler oder eine Datenverfälschung im EEPROM vor. Übertragungsfehler können durch nochmaliges Auslesen der Daten kompensiert werden. Datenverfälschungen im EEPROM werden der Datenverarbeitungsanlage DVA mitgeteilt.

Eine andere vorteilhafte Art der Datensicherung besteht darin, daß die Identifikationsdaten mit den Paritätsbits addiert werden. Die dabei gewonnene 8-Bit-breite Prüfsumme wird am Ende des Datenblocks im EEPROM abgespeichert. Die höherwertigen Bits der Prüfsumme, die nicht mehr in die Wortbreite passen, werden ignoriert. Wenn später der Signalsammler 10 die Identifikationsdaten ausliest, wird das Paritätsbit kontrolliert, die Datenbytes addiert und die im Signalsammler errechnete Prüfsumme mit der empfangenen verglichen. Wurde ein Fehler festgestellt, so werden die Daten nochmals ausgelesen.

## Patentansprüche

1. Verfahren zum Sammeln von Eigenüberwachungsinformationen in Übertragungseinrichtungen der elektrischen Nachrichtenübertragungstechnik, die steckbare Baueinheiten enthalten, von denen wenigstens ein Teil Überwachungsvorrichtungen mit Gebern für Eigenüberwachungsinformationen enthält, wobei die Informationsgeber an Signalsammler (10) angeschlossen sind, die von den Signalsammlern (10) erfaßten Eigenüberwachungsinformationen Identifikationsdaten enthalten und wenigstens ein Teil der Baugruppen Speicher für die Identifikationsdaten aufweist,
**dadurch gekennzeichnet,**
daß die Identifikationsdaten mittels eines Einstellcomputers in die einen seriellen Dateneingang und einen seriellen Datenausgang aufweisenden, durch EEPROMs (30) gebildeten Speicherbausteine der Baueinheiten eingebbar sind und mittels des Signalsammlers (10) adressenselektiv und taktgesteuert abfragbar sind.

2. Verfahren nach Anspruch 1,
**dadurch gekennzeichnet,**
daß die Identifikationsdaten vom Signalsammler (10) zyklisch abgefragt und an eine zentrale Überwachungsvorrichtung (Datenverarbeitungsanordnung 14) nach der ersten Meldung bei Inbetriebnahme nur noch bei Änderungen von Identifikationsdaten übermittelt werden.

3. Schaltungsanordnung zum Sammeln von Eigenüberwachungsinformationen in Übertragungseinrichtungen der elektrischen Nachrichtenübertragungstechnik, die steckbare Baueinheiten enthalten, von denen wenigstens ein Teil Überwachungsvorrichtungen mit Gebern für Eigenüberwachungsinformationen enthält, wobei die Informationsgeber an Signalsammler (10) angeschlossen sind, die von den Signalsammlern (10) erfaßten Eigenüberwachungsinformationen Identifikationsdaten enthalten und wenigstens ein Teil der Baugruppen Speicher für die Identifikationsdaten aufweist, zur Durchführung des Verfahrens nach Anspruch 1,
**dadurch gekennzeichnet,**
daß die Speicher für die Identifikationsdaten durch einen seriellen Dateneingang und einen seriellen Datenausgang aufweisende EEPROMs (30) gebildete Speicherbausteine der Baueinheiten sind und mittels des Signalsammlers (10) adressenselektiv und taktgesteuert abfragbar sind und daß die Speicherbausteine (30) mit ihren Takteingängen (SCL), mit ihren seriellen Dateneingängen (301) und mit ihren seriellen Datenausgängen (301) über Busleitungen (51...54) an den zugeordneten Signalsammler (10) angeschlossen sind.

4. Schaltungsanordnung zum Sammeln von Eigenüberwachungsinformationen in Übertragungseinrichtungen der elektrischen Nachrichtenübertragungstechnik, die steckbare Baueinheiten enthalten, von denen wenigstens ein Teil Überwachungsvorrichtungen mit Gebern für Eigenüberwachungsinformationen enthält, wobei die Informationsgeber an Signalsammler (10) angeschlossen sind, die von den Signalsammlern (10) erfaßten Eigenüberwachungsinformationen Identifikationsdaten enthalten und wenigstens ein Teil der Baugruppen Speicher für die Identifikationsdaten aufweist, zur Durchführung des Verfahrens nach Anspruch 1,
**dadurch gekennzeichnet,**
daß die Speicher für die Identifikationsdaten durch einen seriellen Dateneingang und einen seriellen Datenausgang aufweisende EEPROMs (30) gebildete Speicherbausteine der Baueinheiten sind und mittels des Signalsammlers (10) adressenselektiv und taktgesteuert abfragbar sind und daß der Signalsammler (10) eine Vorrichtung zum zyklischen adressenselektiven und taktgesteuerten Auslesen der Identifikationsdaten und eine Vorrichtung zum Alt-Neu-Vergleich der empfangenen Identifikationsdaten enthält, die im zyklischen Abfragebetrieb nach der ersten Meldung bei Inbetriebnahme Identifikationsdaten nur noch bei Änderungen der Identifikationsdaten an eine zentrale Überwachungsvorrichtung (Datenverarbeitungsanordnung 14) übermittelt.

5. Schaltungsanordnung nach Anspruch 3 oder 4,
**dadurch gekennzeichnet,**
daß der Speicherbaustein (30) Anschlüsse (A0,A1) zur Bausteinfreigabe aufweist, die baueinheits- oder steckplatzindividuell mit Aktivierungspotential (Masse) verbindbar sind und daß die EEPROMs (30) mittels seriell über die Datenleitungen (51...54) übertragbarer Adressen aufrufbar sind.

6. Schaltungsanordnung nach Anspruch 3 oder 4,
**dadurch gekennzeichnet,**
daß die Speicherbausteine (30) jeweils mit einem Anschluß (A0) zur Bausteinfreigabe an eine eigene Aufrufleitung (8l...8n) angeschlossen ist.

7. Schaltungsanordnung nach einem der Ansprüche 3 bis 6,
**dadurch gekennzeichnet,**
daß ein Datenausgang des Speicherbausteines (30) an einen Eingang eines mit weiteren Eingängen an einen Fehlermeldungsgeber (F) angeschlossenen Schieberegisters geführt ist.

8. Schaltungsanordnung nach einem der Ansprüche 3 bis 5,
**dadurch gekennzeichnet,**
daß im Speicherbaustein zusätzlich zu den Identifikationsdaten Speicherplätze für Paritätsbits und/oder Block-Sicherungsfelder vorgesehen sind.

9. Schaltungsanordnung nach einem der Ansprüche 3 bis 6,
**dadurch gekennzeichnet,**
daß der Speicherbaustein (30) mit seinem Speisespannungseingang über eine Diode an die Taktleitung angeschlossen und mit einem Siebkondensator versehen ist.

10. Schaltungsanordnung nach Anspruch 3,
**dadurch gekennzeichnet,**
daß der Speicherbaustein (30) mit seinem Speisespannungseingang an die Aufrufleitung angeschlossen ist.

11. Schaltungsanordnung nach einem der Ansprüche 3 - 5 oder 6 - 10,
**dadurch gekennzeichnet,**
daß die Einschübe (3) jeweils eine Vorrichtung (4) zur Adresseneinstellung und einen an diese Vorrichtung (4) und an einen mit dem Signalsammler (10) verbundenen Adressenbus (9) angeschlossenen Adressenvergleicher (35) enthalten, und daß ein Anschluß (CS) des Speicherbausteins (30) an den Adressenvergleicher (41) angeschlossen ist.

## Claims

1. A method for collecting self-monitoring information in transmission devices of electrical information transmission technology, which contain constructional plug-in units, at least some of which contain monitoring devices with transmitters for self-monitoring information, the information transmitters being connected to signal collectors (10), the self-monitoring information detected by the signal collectors (10) containing identification data and at least some of the assemblies exhibiting memories for the identification data, characterised in that the identification data can be input by means of an adjustment computer into the memory chips of the constructional units, which have a serial data input and a serial data output and are formed by EEPROMs (30), and can be address-selectively interrogated under clock control by means of the signal collector (10).

2. Method according to Claim 1, characterised in that the identification data are cyclically interrogated by the signal collector (10) and, after the first signalling on commissioning, are only transmitted to a central monitoring device (data processing arrangement 14) in the event of changes of identification data.

3. Circuit arrangement for collecting self-monitoring information in transmission devices of electrical information transmission technology which contain constructional plug-in units, at least some of which contain monitoring devices with transmitters for self-monitoring information, the information transmitters being connected to signal collectors (10), the self-monitoring information detected by the signal collectors (10) containing identification data and at least some of the assemblies exhibiting memories for the identification data, for carrying out the method according to Claim 1, characterised in that the memories for the identification data are memory chips of the constructional units, formed by EEPROMs (30) exhibiting a serial data input and a serial data output and can be address-selectively interrogated under clock control by means of the signal collector (10), and in that the memory chips (30) are connected with their clock inputs (SCL), with their serial data inputs (301) and with their serial data outputs (301) to the associated signal collector (10) via bus lines (51...54).

4. Circuit arrangement for collecting self-monitoring information in transmission devices of the electrical information transmission technology which contain constructional plug-in units, at least some of which contain monitoring devices with transmitters for self-monitoring information, the information transmitters being connected to signal collectors (10), the self-monitoring information detected by the signal collectors (10) containing identification data and at least some of the assemblies exhibiting memories for the identification data, for carrying out the method according to Claim 1, characterised in that the memories for the identification data are memory chips of the constructional units, formed by EEPROMs (30) exhibiting a serial data input and a serial data output, and can be address-selectively interrogated under clock control by means of the signal collector (10), and in that the signal collector (10) contains a device for the cyclic address-selective and clock-controlled reading-out of the identification data and a device for the old/new comparison of the received identification data which, in the cyclic interrogation mode, after the first signalling on commissioning, only transmits identification data to a central monitoring device (data processing arrangement 14) in the event of changes in the identification data.

5. Circuit arrangement according to Claim 3 or 4, characterised in that the memory chip (30) exhibits connections (A0, A1) for chip enabling which can be connected to activation potential (earth) individually per constructional unit or plug-in location, and in that the EEPROMs (30) can be called up by means of addresses which can be serially transmitted via the data lines (51...54).

6. Circuit arrangement according to Claim 3 or 4, characterised in that the memory chips (30) are in each case connected with one connection (A0) for chip enabling to a separate call-up line (8l...8n).

7. Circuit arrangement according to one of Claims 3 to 6, characterised in that a data output of the memory chip (30) is conducted to an input of a shift register connected with further inputs to an error signal transmitter (F).

8. Circuit arrangement according to one of Claims 3 to 5, characterised in that, in addition to the identification data, the memory chip contains storage locations for parity bits and/or block check fields.

9. Circuit arrangement according to one of Claims 3 to 6, characterised in that the memory chip (30) is connected with its feed voltage input to the clock line via a diode and is provided with a filter capacitor.

10. Circuit arrangement according to Claim 3, characterised in that the memory chip (30) is connected with its feed voltage input to the call-up line.

11. Circuit arrangement according to one of Claims 3 - 5 or 6 - 10, characterised in that the plug-in units (3) in each case contain a device (4) for address setting and an address comparator (35) connected to this device (4) and to an address bus (9) connected to the signal collector (10), and in that a connection (CS) of the memory chip (30) is connected to the address comparator (41).

## Revendications

1. Procédé pour collecter des informations d'autocontrôle dans des dispositifs de transmission de la technique électrique de transmission d'informations, qui comportent des modules enfichables, dont au moins une partie possède des dispositifs de contrôle pourvus de capteurs servant à détecter des informations d'autocontrôle, les capteurs d'informations étant raccordé à des dispositifs (10) de collecte des signaux, tandis que les informations d'autocontrôle détectées par les dispositifs (10) de collecte des signaux contiennent des données d'identification et qu'au moins une partie des modules comporte des mémoires pour les données d'identification, caractérisé par le fait que les données d'identification peuvent être introduites au moyen d'un ordinateur de réglage dans les unités de mémoire des modules de mémoire, qui comportent une entrée de données en série et une sortie de données en série et sont formées par des mémoires EEPROM (30) et peuvent être interrogées, d'une manière sélective du point de vue des adresses et avec commande de cadencement, au moyen du dispositif (10) de collecte des signaux.

2. Procédé suivant la revendication 1, caractérisé par le fait que les données d'identification sont interrogées cycliquement par le dispositif (10) de collecte des signaux et ne sont retransmis à un dispositif central de contrôle (dispositif 14 de traitement des données), après la première signalisation, et lors de la mise en service, seulement lors de modifications de données d'identification.

3. Montage pour collecter des informations d'autocontrôle dans des dispositifs de transmission de la technique électrique de transmission d'informations, qui comportent des modules enfichables, dont au moins une partie possède des dispositifs de contrôle pourvus de capteurs servant à détecter des informations d'autocontrôle, les capteurs d'informations étant raccordé à des dispositifs (10) de collecte des signaux, tandis que les informations d'autocontrôle détectées par les dispositifs (10) de collecte des signaux contiennent des données d'identification et qu'au moins une partie des modules comporte des mémoires pour les données d'identification, pour la mise en oeuvre du procédé suivant la revendication 1, caractérisé par le fait que les mémoires pour les données d'identification sont des unités de mémoire des modules, qui sont formées par des mémoires EEPROM (30) comportant une entrée de données en série et une sortie de données en série et peuvent être interrogées, d'une manière sélective du point de vue des adresses et avec une commande de cadencement, au moyen du dispositif (10) de collecte des signaux et que les unités de mémoire (30) sont raccordées par leurs entrées de cadence (SCL), par leurs entrées de données en série (301) et par leurs sorties de données en série (301), par l'intermédiaire de lignes formant bus (51...54), au dispositif associé (10) de collecte des données.

4. Montage pour collecter des informations d'autocontrôle dans des dispositifs de transmission de la technique électrique de transmission d'informations, qui comportent des modules enfichables, dont au moins une partie possède des dispositifs de contrôle pourvus de capteurs servant à détecter des informations d'autocontrôle, les capteurs d'informations étant raccordé à des dispositifs (10) de collecte des signaux, tandis que les informations d'autocontrôle détectées par les dispositifs (10) de collecte des signaux contiennent des données d'identification et qu'au moins une partie des modules comporte des mémoires pour les données d'identification, pour la mise en oeuvre du procédé suivant la revendication 1, caractérisé par le fait que les mémoires pour les données d'identification sont des unités de mémoire des modules, qui sont formées par des mémoires EEPROM (30) comportant une entrée de données en série et une sortie de données en série et peuvent être interrogées, d'une manière sélective du point de vue des adresses et avec une commande de cadencement, au moyen du dispositif (10) de collecte des signaux et que le dispositif (10) de collecte des signaux comporte un dispositif pour réaliser la lecture cyclique, sélective du point de vue des adresses et commandée de façon cadencée, des données d'identification et un dispositif pour réaliser la comparaison valeur ancienne - valeur nouvelle des données d'identification reçues et qui ne transmet, selon le fonctionnement d'interrogation cyclique, après la première signalisation, lors de la mise en service, des données d'identification à un dispositif central de contrôle (dispositif de traitement de données 14) que dans le cas de modification des données d'identification.

5. Montage suivant la revendication 3 ou 4, caractérisé par le fait que l'unité de mémoire (30) comporte des bornes (A0, A1) pour la libération de modules et qui peuvent être raccordées individuellement pour chaque module ou chaque poste d'enfichage, à un potentiel d'activation (masse) et que les mémoires EEPROM (30) peuvent être appelées au moyen d'adresses pouvant être transmises en série par l'intermédiaire des lignes de transmission de données (51...54).

6. Montage suivant la revendication 3 ou 4, caractérisé par le fait que les unités de mémoire (30) sont raccordées respectivement à une borne (A0) pour la libération de modules, à une ligne particulière d'appel (81...8n).

7. Montage suivant l'une des revendications 3 à 6, caractérisé par le fait qu'une sortie de données de l'unité de mémoire (30) est raccordée à une entrée d'un registre à décalage, qui est raccordé à d'autres entrées d'un générateur de signalisation d'erreurs (F).

8. Montage suivant l'une des revendications 3 à 5, caractérisé par le fait que dans l'unité de mémoire, des emplacements de mémoire pour des bits de parité et/ou des zones de sécurité de blocs sont prévues en plus des données d'identification.

9. Montage suivant l'une des revendications 3 à 6, caractérisé par le fait que l'unité de mémoire (30) est raccordée, par son entrée de tension d'alimentation, et par l'intermédiaire d'une diode, à la ligne de signaux de cadence et est pourvu d'un condensateur de lissage.

10. Montage suivant la revendication 3, caractérisé par le fait que l'unité de mémoire (30) est raccordée par son entrée de tension d'alimentation à la ligne de transmission d'appels.

11. Montage suivant l'une des revendications 3-5 ou 6-10, caractérisé par le fait que les inserts (3) contiennent respectivement un dispositif (4) de réglage d'adresses et un comparateur d'adresses (35) raccordé à un bus de transmission d'adresses (9), relié au dispositif (10) de collecte des signaux, et qu'une borne (CS) de l'unité de mémoire (30) est raccordée au comparateur d'adresses (41).
